# EUROPÄISCHE PATENTSCHRIFT

(11) **EP 1 364 825 B1**
(45) Veröffentlichungstag und Bekanntmachung des Hinweises auf die Patenterteilung: **14.11.2007**
(21) Anmeldenummer: 03010731.2
(22) Anmeldetag: 14.05.2003
(51) Int. Cl.: B60L 3/00, H02P 7/00, H02H 7/08, H02P 6/12

(54) **Verfahren zum Betreiben eines Elektromotors**
Method for operating an electrical motor
Méthode pour opérer un moteur électrique

(30) Priorität: 25.05.2002 DE 10223384
(43) Veröffentlichungstag der Anmeldung: 26.11.2003
(73) Patentinhaber: Conti Temic microelectronic GmbH, 90411 Nürnberg (DE)
(72) Erfinder: Ehrmann, Martin, Dipl.-Ing., 90451 Nürnberg (DE); Hartung, Norbert, Dipl.-Ing. (FH), 92712 Pirk bei Weiden (DE)

(56) Entgegenhaltungen:
- JP-A- 2002 084 773
- US-A- 5 023 531
- US-A- 5 357 181
- US-A- 5 646 510
- US-B1- 6 239 566

## Beschreibung

Die Erfindung betrifft ein Verfahren zum Betreiben eines Elektromotors gemäß dem Patentanspruch 1.

Ein derartiges Verfahren ist beispielsweise aus der DE 40 40 847 C2 bekannt. Bei diesem bekannten Verfahren wird ein elektronisch kommutierter Gleichstrommotor zum Antreiben eines Lüfters eingesetzt. Um zu verhindern, daß die vom Lüfter zu kühlenden Einrichtungen bei einer Fehlfunktion des Elektromotors thermisch überlastet werden, wird mit einem geeigneten Sensor durch Messung und Auswertung eines vom Elektromotor aufgenommenen Motorstroms oder der Drehzahl des Elektromotors geprüft, ob der Elektromotor blockiert ist oder nicht ordnungsgemäß läuft. Trifft dies zu, wird für die zu kühlenden Einrichtungen eine Notlauffunktion eingeschaltet. In US 5646510 wird eine Steuerung beschrieben, die in der Lage ist, einen defekten Stromsensor zu erkennen und in einem solchen Fehlerfall eine Fortsetzung des Betriebes des Motors sicherzustellen.

Nachteilig ist hierbei, daß eine Fehlfunktion des Motors bei einem Ausfall des Sensors nicht erkannt wird, was zu einer thermischen Überlastung des Motors führen kann.

Der Erfindung liegt daher die Aufgabe zugrunde, ein Verfahren gemäß dem Oberbegriff des Patentanspruchs 1 anzugeben, bei dem auch bei einem ausgefallenem Sensor, sichergestellt ist, daß der Motor und die den Motor ansteuernden Einrichtungen nicht überlastet werden.

Die Aufgabe wird durch die Merkmale des Patentanspruchs 1 gelöst. Vorteilhafte Ausgestaltungen und Weiterbildungen ergeben sich aus den Unteransprüchen.

Beim erfindungsgemäßen Verfahren wird ein Stromsensor, der zur Messung eines vom Elektromotor aufgenommenen Motorstroms vorgesehen ist, bei einer Leistungsanforderung zunächst als fehlerhaft angesehen und anschließend, sobald der gemessene Motorstrom einen vorgegebenen Schwellwert überschreitet, als fehlerfrei angesehen. Vorzugsweise wird der Stromsensor jedesmal, wenn der Motorstrom den vorgegebenen Schwellwert unterschreitet, als fehlerhaft angesehen und jedesmal, wenn der Motorstrom den Schwellwert überschreitet, als fehlerfrei angesehen.

Der Elektromotor wird, falls der Stromsensor als fehlerfrei angesehen wird, in einem Normalbetriebsmodus betrieben, in dem er in Abhängigkeit des Motorstroms angesteuert wird. Ansonsten wird er in einem Notlaufbetriebsmodus betrieben, in dem er unabhängig vom Motorstrom derart angesteuert wird, daß er und/oder ein den Motorstrom führender Schaltungsteil auch im ungünstigsten Betriebsfall, beispielsweise auch bei einem Stillstand, thermisch nicht überlastet wird oder werden.

Bei einem Elektromotor, bei dem mehrere Motorströme mit jeweils einem eigenen Stromsensor gemessen werden, wir jeder der Stromsensoren bei einer Leistungsanforderung zunächst als fehlerhaft angesehen und erst dann als fehlerfrei angesehen, wenn der mit dem jeweiligen Stromsensor gemessene Motorstrom den vorgegebenen Schwellwert überschreitet. Der Elektromotor wird dann im Notlaufbetriebsmodus betrieben, wenn mindestens einer der Stromsensoren als fehlerhaft angesehen wird. Ansonsten wird er im Normalbetriebsmodus betrieben.

Vorzugsweise wird auch die Drehzahl des Elektromotors gemessen und der Elektromotor wird sowohl im Notlaufbetriebsmodus als auch im Normalbetriebsmodus in Abhängigkeit der gemessenen Drehzahl und einer dem Elektromotor zugeführten Versorgungsspannung angesteuert.

Das erfindungsgemäße Verfahren ermöglicht einen sicheren Motorbetrieb, ohne daß eine Umschaltung des Betriebsmodus in einen Testmodus zum Testen des Stromsensors erforderlich ist und ohne daß redundante Sensoren benötigt werden oder eine Plausibilitätsprüfung durch Auswertung von Sensorsignalen von unterschiedlichen Sensoren durchgeführt werden muß. Das Verfahren eignet sich bestens zum Betreiben eines durch den Elektromotor angetriebenen Lüfters, insbesondere eines Kühlerlüfters für Kraftfahrzeuge.

Die Erfindung wird nachfolgend anhand von Ausführungsbeispielen und Figuren näher erläutert. Es zeigen:
- Figur 1: ein Blockschaltbild einer Schaltungsanordnung zur Ansteuerung eines Elektromotors,
- Figur 2: ein Zeitdiagramm eines vom Elektromotor aus Figur 1 aufgenommenen Motorstroms,
- Figur 3: ein weiteres Zeitdiagramm des aufgenommenen Motorstroms.

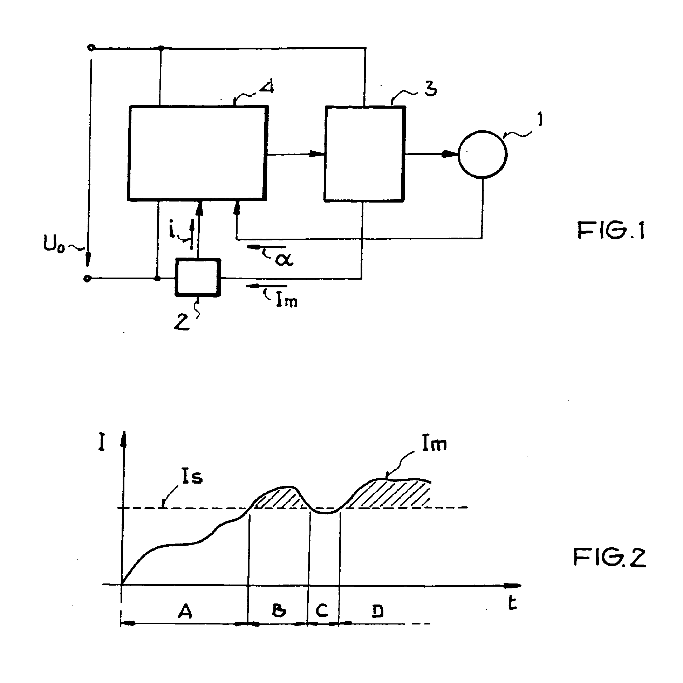

Die Schaltungsanordnung gemäß Figur 1 ist beispielsweise Teil eines Steuergeräts zur Regelung der Drehzahl eines Kühlerlüfters in einem Kraftfahrzeug. Sie umfaßt einen Elektromotor 1, beispielsweise einen elektronisch kommutierten Gleichstrommotor, einen Stromsensor 2 zur Messung des durch den Elektromotor 1 fließenden Motorstroms Im, beispielsweise einen Shuntwiderstand, eine Motortreiberstufe 3, der eine Versorgungsspannung U0 zugeführt wird und über die der Elektromotor 1 mit dem Motorstrom Im bestromt wird, und eine beispielsweise als Mikrokontroller ausgeführte Steuereinheit 4, der die Versorgungsspannung U0, ein Stromsignal i als Maß des Motorstroms Im sowie ein Positionssignal α als Maß des Rotorwinkels des Elektromotors 1 zugeführt werden und die zur Ansteuerung der Motortreiberstufe 3 vorgesehen ist. Das Stromsignal i ist dabei ein vom Stromsensor 2 abgegebenes Signal und das Positionssignal α ist ein Signal, das von einem im Elektromotor 1 vorgesehenen Winkellagendetektor abgegebenen wird und aus dem die Drehzahl des Elektromotors 1 ermittelt werden kann.

Figur 2 zeigt ein Beispiel für den zeitlichen Verlauf des gemessenen Motorstroms Im, sowie einen vorgegebenen Schwellwert Is und Zeitbereiche A, C, und B, D in denen der gemessene Motorstrom Im kleiner bzw. größer als der vorgegebene Schwellwert Is ist. Der Schwellwert Is ist so groß gewählt, daß von jedem oberhalb des Schwellwerts Is liegenden Wert des Motorstroms Im mit Sicherheit behauptet werden kann, daß dieser Wert einen gültigen Motorstromwert darstellt und nicht etwa lediglich einen Rauschbeitrag.

Wenn Leistung angefordert wird, der Elektromotor 1 also gestartet wird, wird zunächst vorausgesetzt, daß der Stromsensor 2 fehlerhaft sei. Der Stromsensor 2 wird dabei solange als fehlerhaft angesehen, bis der gemessene Motorstrom Im den vorgegebenen Schwellwert Is überschreitet. In diesem in der Figur mit A bezeichneten Zeitbereich wird der Elektromotor 1 in einem Notlaufbetriebsmodus betrieben. In diesem Betriebsmodus wird der Elektromotor 1 in Abhängigkeit der Drehzahl und der Versorgungsspannung U0 derart angesteuert, daß eine thermische Überlastung des Elektromotors 2 und der Motortreiberstufe 3 für alle Drehzahlen, also auch für den ungünstigsten Fall, daß der Elektromotor 1 blockiert ist, ausgeschlossen werden kann. Dies bedeutet, daß der Elektromotor 1 nicht mit voller Leistung betrieben werden kann.

Sobald der Motorstrom Im den vorgegebenen Schwellwert Is überschreitet, wird der Stromsensor 2 als fehlerfrei, d. h. als funktionierend angesehen. Bei funktionierendem Stromsensor 2 wird der Elektromotor 1 dann in einem Normalbetriebsmodus betrieben, in dem der Motorstrom Im bei der Ansteuerung des Elektromotors 1 mitberücksichtigt wird und in dem der Elektromotor 1 bis zu seiner Leistungsgrenze ausgesteuert werden kann.

Der Stromsensor 2 kann nun solange als fehlerfrei angesehen werden, wie die Leistungsanforderung vorliegt. Im Beispiel gemäß Figur 2 würde der Stromsensor 2 dann im Zeitbereich A als fehlerhaft und in den Zeitbereichen B, C und D als funktionierend angesehen werden.

Denkbar ist es aber auch, den Stromsensor 2 nur solange als fehlerfrei anzusehen, bis der Motorstrom Im den vorgegebenen Schwellwert Is unterschreitet und ihn anschließend erst bei einem erneuten Überschreiten des vorgegebenen Schwellwerts Is wieder als fehlerfrei anzusehen. Im Beispiel gemäß Figur 2 würde der Stromsensor 2 dann in den Zeitbereichen A und C als fehlerhaft und in den Zeitbereichen B und D als funktionierend angesehen werden.

Ist der Stromsensor 2 tatsächlich defekt, wird der Elektromotor 2 im Notlaufbetriebsmodus mit soweit reduzierter Leistung betrieben, daß eine Überlastung des Motors oder der Motortreiberstufe 3 ausgeschlossen werden kann und somit trotz defektem Stromsensor 2 ein sicherer Betrieb gewährleistet wird. Bei tatsächlich funktionierendem Stromsensor 3 stellt der Betrieb im Notlaufbetriebsmodus keine Einschränkung dar, da in Fällen, in denen zum Erreichen einer gewünschten Drehzahl lediglich ein unterhalb des Schwellwerts Is liegender Motorstrom Im benötigt wird, das Erreichen dieser Drehzahl auch im Notlaufbetriebsmodus gewährleistet wird.

Das erfindungsgemäße Verfahren ermöglicht bei funktionierendem Stromsensor 2 einen uneingeschränkten Betrieb des Elektromotors 1 und bei defektem Strommeßsensor 2 einen eingeschränkten aber sicheren Betrieb des Elektromotors 1, ohne daß die Funktionsweise des Stromsensors 2 durch Testsignale, redundante Sensoren oder eine Plausibilitätsprüfung geprüft werden muß.

Beim vorliegenden Ausführungsbeispiel wird mit einem einzigen Stromsensor der gesamte durch den Elektromotor fließende Strom als Motorstrom gemessen. Selbstverständlich ist das erfindungsgemäße Verfahren auch in solchen Fällen anwendbar, in denen mit mehreren Stromsensoren jeweils ein Teil des gesamten Stroms als Motorstrom gemessen wird. Ein derartiger Fall wäre beispielsweise die Steuerung eines mehrphasigen Elektromotors, bei dem die einzelnen Phasenströme jeweils als Motorstrom gemessen werden. Der Elektromotor wird dann bei fehlerfreien Stromsensoren im Normalbetriebsmodus und bei mindestens einem als fehlerhaft angesehenem Stromsensor im Notlaufbetriebsmodus betrieben.

## Patentansprüche

1. Verfahren zum Betreiben eines Elektromotors (1), bei dem mindestens ein vom Elektromotor (2) aufgenommener Motorstrom (Im) mit mindestens einem Stromsensor (2) gemessen wird, **dadurch gekennzeichnet, daß** der mindestens eine Stromsensor (2) oder jeder Stromsensor bei einer Leistungsanforderung zunächst als fehlerhaft angesehen wird und erst dann als fehlerfrei angesehen wird, wenn der mit dem mindestens einen Stromsensor (2) oder dem jeweiligen Stromsensor gemessene Motorstrom (Im) einen vorgegebenen Schwellwert (ls) überschreitet, und daß der Elektromotor (1) bei als fehlerfrei angesehenem Stromsensor (2) oder bei als fehlerfrei angesehenen Stromsensoren in einem Normalbetriebsmodus betrieben wird, in dem er in Abhängigkeit des Motorstroms (Im) angesteuert wird, und bei als fehlerhaft angesehenem Stromsensor (2) oder bei mindestens einem als fehlerhaft angesehenem Stromsensor in einem Notlaufbetriebsmodus betrieben wird, in dem er unabhängig vom Motorstrom (Im) derart angesteuert wird, daß auch im ungünstigsten Betriebsfall eine thermische Überlastung des Elektromotors (1) und/oder einer der den Motorstrom (lm) führenden Motortreiberstufe (3) vermieden wird.

2. Verfahren nach Anspruch 1, **dadurch gekennzeichnet, daß** der mindestens eine Stromsensor (2) oder jeder der Stromsensoren als fehlerhaft angesehen wird, wenn der Motorstrom (Im) den vorgegebenen Schwellwert (Is) unterschreitet, und erst dann wieder als fehlerfrei angesehen wird, wenn der Motorstrom (lm) den vorgegebenen Schwellwert (Is) erneut überschreitet.

3. Verfahren nach Anspruch 1 oder 2, **dadurch gekennzeichnet, daß** die Drehzahl des Elektromotors (1) gemessen wird, und daß der Elektromotor (1) im Notlaufbetriebsmodus und im Normalbetriebsmodus in Abhängigkeit der gemessenen Drehzahl und einer dem Elektromotor (1) zugeführten Versorgungsspannung (U0) angesteuert wird.

4. Verwendung des Verfahrens nach einem der vorherigen Ansprüche zum Betreiben eines elektronisch kommutierten Gleichstrommotors (1).

## Claims

1. A process for operating an electromotor (1), wherein at least one motor current (lm) absorbed by the electromotor (2) is measured with at least one current sensor (2), **characterised in that** in the event of power requirement at least one current sensor (2) or each current sensor is first viewed as faulty and is only then viewed as error-free if the motor current (lm) measured with at least one current sensor (2) or the respective current sensor exceeds a preset threshold value (Is), and **in that** the electromotor (1) is operated with a current sensor (2) viewed as error-free or with current sensors viewed as error-free in the normal operating mode, in which it is driven depending on the motor current (lm), and is operated with a current sensor (2) viewed as faulty or with at least one current sensor viewed as faulty in the emergency operating mode, in which it is driven independently of the motor current (1m) such that even in the event of unfavourable operation thermal overload of the electromotor (1) and/or a motor driver stage (3) guiding the motor current (lm) is avoided.

2. The process as claimed in Claim 1, **characterised in that** at least one current sensor (2) or each of the current sensors is viewed as faulty if the motor current (lm) falls below the preset threshold value (Is), and is only then again viewed as error-free if the motor current (1m) again exceeds the preset threshold value (Is).

3. The process as claimed in Claim 1 or 2, **characterised in that** the speed of the electromotor (1) is measured, and **in that** the electromotor (1) is driven in the emergency operating mode and in the normal operating mode depending on the measured speed and a supply voltage (UO) fed to the electromotor (1).

4. Use of the process as claimed in any one of the preceding claims for operating an electronically switched direct-current motor (1).

## Revendications

1. Procédé pour le fonctionnement d'un moteur électrique (1), avec lequel au moins un courant de moteur (lm) reçu par le moteur électrique (2) est mesuré avec au moins un capteur de courant (2), **caractérisé en ce que** l'au moins un capteur de courant (2) ou chaque capteur de courant est considéré d'abord comme défectueux lors d'une exigence de performance et n'est considéré comme non défectueux que lorsque le courant de moteur (lm) mesuré avec l'au moins un capteur de courant (2) ou le capteur de courant respectif dépasse une valeur de seuil (ls) spécifiée, et **en ce que** le moteur électrique (1) fonctionne en mode normal en cas de capteur de courant (2) considéré comme non défectueux ou de capteurs de courant considérés comme non défectueux, mode de fonctionnement dans lequel il est piloté en fonction du courant de moteur (lm) et fonctionne en mode de secours en cas d'un capteur de courant (2) considéré comme défectueux ou d'au moins un capteur de courant considéré comme défectueux, mode de fonctionnement dans lequel il est piloté indépendamment du courant de moteur (lm) de telle sorte que, également dans le cas de fonctionnement le plus défavorable, une surcharge thermique du moteur électrique (1) et/ou d'un des étages driver du moteur (3) amenant le courant de moteur (lm) est évitée.

2. Procédé selon la revendication 1, **caractérisé en ce que** l'au moins un capteur de courant (2) ou chacun des capteurs de courant est considéré comme défectueux lorsque le courant de moteur (lm) passe sous la valeur de seuil (ls) spécifiée et est seulement considéré de nouveau comme non défectueux lorsque le courant de moteur (lm) dépasse de nouveau la valeur de seuil (ls) spécifiée.

3. Procédé selon la revendication 1 ou 2, **caractérisé en ce que** la vitesse de rotation du moteur électrique (1) est mesurée et **en ce que** le moteur électrique (1) est piloté en mode de secours et en mode normal en fonction de la vitesse de rotation mesurée et d'une tension d'alimentation (U0) amenée au moteur électrique (1).

4. Utilisation du procédé selon l'une des revendications précédentes pour le fonctionnement d'un moteur à courant continu (1) commuté électroniquement.
